# EUROPEAN PATENT SPECIFICATION

(11) **EP 4 467 670 B1**
(45) Date of publication and mention of the grant of the patent: **07.10.2026**
(21) Application number: 22922145.2
(22) Date of filing: 16.12.2022
(51) Int. Cl.: C21D 9/40, F16C 19/18, F16C 33/58, F16C 33/64, B60B 35/02

(54) **WHEEL BEARING DEVICE**
RADLAGERVORRICHTUNG
DISPOSITIF DE PALIER DE ROUE

(30) Priority: 18.01.2022 JP 2022005839
(43) Date of publication of application: 27.11.2024
(73) Proprietor: NTN Corporation, Osaka-shi, Osaka 530-0005 (JP)
(72) Inventor: MATSUTANI, Ryota, Iwata-shi, Shizuoka 438-8510 (JP)
(74) Representative: Grünecker Patent- und Rechtsanwälte PartG mbB
(86) International application number: PCT/JP2022/046437
(87) International publication number: WO 2023/139994

(56) References cited:
- JP-A- 2000 211 310
- JP-A- 2010 241 189
- JP-A- 2010 241 189
- JP-A- 2014 077 527
- JP-A- 2014 077 527
- JP-A- 2014 142 054
- JP-A- 2014 142 054
- JP-A- 2017 082 824
- JP-A- 2017 082 824
- US-B1- 6 280 093
- US-B1- 6 287 009

## Description

### TECHNICAL FIELD

The present invention relates to a bearing device for a vehicle wheel.

### BACKGROUND ART

In recent years, the size of a vehicle have become larger with respect to the size of a bearing device for a vehicle wheel. Meanwhile, cars are becoming widespread in markets with poor roadway infrastructure. This causes an excessive radial load applied to a vehicle wheel, which may easily create an indentation on a raceway surface. On an outer-side of an outer member, in particular, the roundness of the raceway surface is likely to be significantly deteriorated by applied load. When the steel ball load factor (ratio of the number of rolling elements receiving a load to the total number of rolling elements) is significantly reduced, a large indentation is created compared a case of the inner-side of the outer member and other components. Meanwhile, one of the most effective ways to improve indentation resistance is to increase a hardened layer depth created by induction hardening (induction hardened depth). However, increasing the hardened layer depth created by induction hardening has an adverse effect such as quenching crack and shortened bearing life due to deterioration in crystal grain size caused by overheating.

Patent Literature 1 discloses a bearing unit for a vehicle wheel (bearing device for a vehicle wheel) in which effective hardened layer depths created by induction hardening of an outer ring raceway on the outer side (outer-side raceway surface) and an outer ring raceway on the inner side (inner-side raceway surface) can be set appropriately in accordance with the characteristics of loads that the raceway surfaces receive. This bearing unit for a vehicle wheel work under the most severe load that occurs on the outer side of a turn when a car driven normally turns in which, generally, the raceway surface on the inner-side receives a high load. Patent Literature 2 discloses a bearing device according to the preamble of claims 1 and 3.

### CITATIONS LIST

### PATENT LITERATURE

Patent Literature 1: JP-A 2007-332998 Gazette
Patent Literature 2: JP-A 2014-142054

### SUMMARY OF INVENTION

### TECHNICAL PROBLEMS

However, in Patent Literature 1, application of the bearing unit for a vehicle wheel is not clear, and the purpose for improvement in indentation resistance, improvement in wear resistance, improvement in bearing life, and the like are not described. That is, a configuration directed to improvement of indentation resistance is not disclosed. In addition, as described above, increasing the hardened layer depth created by induction hardening as a way of improving indentation resistance may cause a quenching crack or deterioration in crystal grain sizes.

An object of the present invention is to provide a bearing device for a vehicle wheel with improved indentation resistance at an outer-side of an outer member while minimizing a quenching crack and deterioration in crystal grain sizes.

### SOLUTIONS TO PROBLEMS

The present invention is defined in independent claims 1 and 3. Preferred embodiments are laid down in the dependent claims.

### ADVANTAGEOUS EFFECTS OF INVENTION

The following effects are manifested as the effects of the present invention.

According to the present invention, indentation resistance at an outer-side of an outer member can be improved while minimizing a quenching crack and deterioration in crystal grain size. Furthermore, according to the present invention, the indentation resistance of an axially inner side (inner-side) portion of an outer raceway surface on the outer-side can be improved.

### BRIEF DESCRIPTION OF DRAWINGS

FIG. 1 is a cross-sectional view illustrating a bearing device for a vehicle wheel.
FIG. 2 is a cross-sectional view illustrating a bearing device for a vehicle wheel according to a first embodiment.
FIG. 3 is a cross-sectional view illustrating a bearing device for a vehicle wheel according to a second embodiment.
FIG. 4 is a cross-sectional view illustrating a bearing device for a vehicle wheel according to a third embodiment.
FIG. 5 is a cross-sectional view illustrating a bearing device for a vehicle wheel according to a fourth embodiment.
FIG. 6 is a cross-sectional view illustrating the bearing device for a vehicle wheel according to the first embodiment, and a partially enlarged cross-sectional view illustrating an inner-side induction-hardened part and a pocket on the inner-side.
FIG. 7 is a front view illustrating a vehicle body mounting flange.

### DESCRIPTION OF EMBODIMENTS

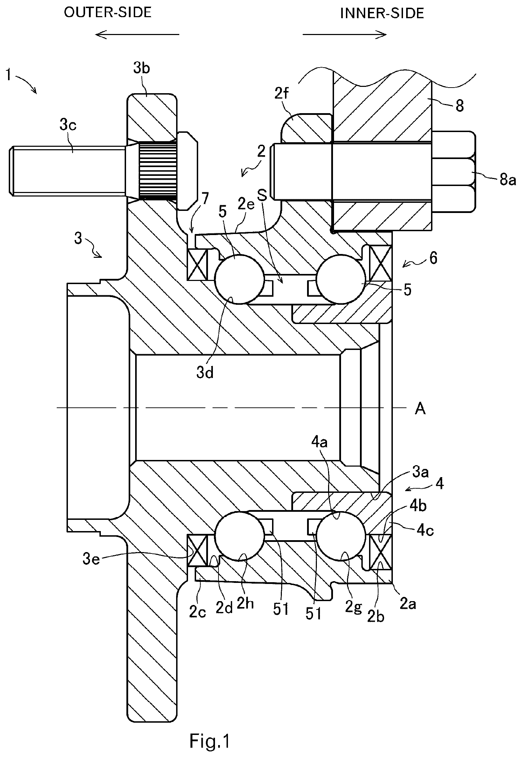

The overall configuration of a bearing device for a vehicle wheel 1 will be described with reference to FIG. 1. In the following description, "inner-side" represents the vehicle body side of the bearing device for a vehicle wheel 1 attached to a vehicle body, and "outer-side" represents the vehicle wheel side of the bearing device for a vehicle wheel 1 attached to the vehicle body. "Axial direction" represents the direction along a rotation axis A of the bearing device for a vehicle wheel 1. "Radial direction" represents the direction orthogonal to the rotation axis A of the bearing device for a vehicle wheel 1. "Circumferential direction" represents the direction along an arc centered on the rotation axis A of the bearing device for a vehicle wheel 1. "Axially outer side" represents the direction away from an annular space S along the rotation axis A, and "axially inner side" represents the direction to approach the annular space S along the rotation axis A.

As illustrated in FIG. 1, the bearing device for a vehicle wheel 1 supports a vehicle wheel to rotate in a suspension device of a vehicle such as a car. The bearing device for a vehicle wheel 1 includes an outer ring 2, a hub ring 3, an inner ring 4, rolling elements 5, an inner-side seal member 6, and an outer-side seal member 7.

The outer ring 2, which is an outer member, supports the hub ring 3 and the inner ring 4. A seal fitting portion 2b to which the inner-side seal member 6 is fitted is provided on an inner circumferential surface of an inner-side end 2a of the outer ring 2. A seal fitting portion 2d to which the outer-side seal member 7 is fitted is provided on an inner circumferential surface of an outer-side end 2c of the outer ring 2. A vehicle body mounting flange 2f is integrally provided on an outer circumferential surface 2e of the outer ring 2. A fixing bolt 8a for fastening together the outer ring 2 and a knuckle 8 is inserted in the vehicle body mounting flange 2f. On the inner circumferential surface of the outer ring 2, a double-row of outer raceway surfaces 2g and 2h is provided along the circumferential direction respectively on the inner-side and the outer-side.

An inner member includes the hub ring 3 and the inner ring 4. The hub ring 3 supports a vehicle wheel to rotate (not illustrated). A radially reduced small-diameter stepped portion 3a extending in the axial direction is provided at an inner-side end of the outer circumferential surface of the hub ring 3. On an outer-side end of the hub ring 3, a vehicle wheel mounting flange 3b for mounting a vehicle wheel is integrally provided. A hub bolt 3c for fastening the hub ring 3 to a vehicle wheel or a braking device is press-fitted in the vehicle wheel mounting flange 3b. Alternatively, a tapped hole for fastening a hub bolt may be provided in the vehicle wheel mounting flange 3b. On the outer circumferential surface on the outer-side of the hub ring 3, an inner raceway surface 3d facing the outer raceway surface 2h on the outer-side is provided. That is, on the outer-side of the inner member, the hub ring 3 forms the inner raceway surface 3d. A sliding surface 3e against which the outer-side seal member 7 slides is provided on the proximal side of the vehicle wheel mounting flange 3b of the hub ring 3.

The inner ring 4 is press-fitted onto the small-diameter stepped portion 3a of the hub ring 3. The inner ring 4 applies a pre-load to the rolling elements 5. On the outer circumferential surface of the inner ring 4, an inner raceway surface 4a facing the outer raceway surface 2g on the inner-side is provided. That is, on the inner-side of the inner member, the inner ring 4 forms the inner raceway surface 4a. A seal fitting portion 4b to which the inner-side seal member 6 is fitted is provided on the outer circumferential surface of an inner-side end 4c of the inner ring 4.

The rolling elements 5 are balls. The rolling elements 5 on the inner-side and the rolling elements 5 on the outer-side are held by cages 51. The rolling elements 5 on the inner-side are held between the inner raceway surface 4a of the inner ring 4 and the outer raceway surface 2g on the inner-side of the outer ring 2 so as to roll. The rolling elements 5 on the outer-side are held between the inner raceway surface 3d of the hub ring 3 and the outer raceway surface 2h on the outer-side of the outer ring 2 so as to roll. That is, the rolling elements 5 on the inner-side and the rolling elements 5 on the outer-side are held between the raceway surfaces of the outer member and the inner member so as to roll. As described above, in the bearing device for a vehicle wheel 1, the outer ring 2, the hub ring 3, the inner ring 4, and the double-row of rolling elements 5 constitute a double-row angular ball bearing. The bearing device for a vehicle wheel 1 may constitute a double-row tapered roller bearing instead of the double-row angular ball bearing.

The inner-side seal member 6 and the outer-side seal member 7, which are seal members, are each a sealing member that closes an open end of the annular space S formed by the outer member and the inner member. The inner-side seal member 6 is attached to an inner-side open end formed between the outer ring 2 and the inner ring 4 of the annular space S. The outer-side seal member 7 is attached to an outer-side open end formed between the outer ring 2 and the hub ring 3 of the annular space S.

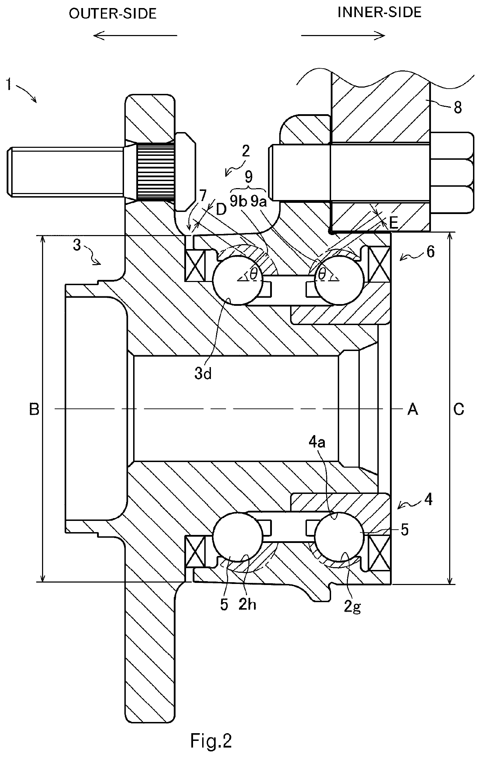

Next, features and effects of the bearing device for a vehicle wheel 1 according to a first embodiment will be described with reference to FIG. 2.

The outer ring 2 is made of medium-carbon steel or high-carbon steel containing 0.40 to 0.80 wt% of carbon such as S53C. The outer ring 2 is subjected to induction hardening along the outer raceway surfaces 2g and 2h in a heat treatment step. An induction-hardened part 9 is formed in the outer ring 2 as a result of the heat treatment step, thereby improving surface hardness and strength.

As illustrated in FIG. 2, the induction-hardened part 9 includes an inner-side induction-hardened part 9a that has been subjected to induction hardening along the outer raceway surface 2g on the inner-side, and an outer-side induction-hardened part 9b that has been subjected to induction hardening along the outer raceway surface 2h on the outer-side. A hardened layer depth D of the outer-side induction-hardened part 9b is deeper than a hardened layer depth E of the inner-side induction-hardened part 9a. The hardened layer depth D of the outer-side induction-hardened part 9b and the hardened layer depth E of the inner-side induction-hardened part 9a each indicate a hardened layer depth at an angle θ of 30 to 45 degrees with respect to the rotation axis A. In the drawing, the angle θ with respect to the rotation axis A on the inner-side is an angle to one side and the angle θ with respect to the rotation axis A on the outer-side is an angle to the other side. The induction-hardened part 9 has a surface hardness of 58 to 64 HRC. The hardened layer depth of the induction-hardened part 9 is the depth of a portion having a hardness of 78% or more of the surface hardness of the induction-hardened part 9. For example, the hardened layer depth D of the outer-side induction-hardened part 9b is 0.5 to 2.2 mm deeper than the hardened layer depth E of the inner-side induction-hardened part 9a at the same angle in axial cross sections of the same rotational phase (circumferential position) under the same definition of the hardened layer depth.

The inner-side induction-hardened part 9a is formed along the entire outer raceway surface 2g on the inner-side. The outer-side induction-hardened part 9b is formed along the entire outer raceway surface 2h on the outer-side. Regarding the hardened layer depth in a direction normal to the outer raceway surface 2h of the outer-side induction-hardened part 9b, the hardened layer depth in the axially inner side (inner-side) of the outer-side hardened layer depth D is deeper than the hardened layer depth in the axially outer side (outer-side) of the outer-side hardened layer depth D. The outer-side induction-hardened part 9b and the inner-side induction-hardened part 9a are separated from each other.

According to the bearing device for a vehicle wheel 1 configured as described above, when a vehicle is large with respect to a bearing size or under a vehicle use condition with poor roadway infrastructure, happening of indentation defects in a market can be reduced by increasing only the hardened layer depth D of the outer-side induction-hardened part 9b of the outer ring 2 where a large indentation may in particular occur. Increasing the hardened layer depth by induction hardening may cause a quenching crack or reduction in bearing life due to deterioration in crystal grain size caused by overheating. But a quenching crack and reduction in bearing life due to deterioration in crystal grain size in the inner-side of the outer ring 2 can be avoided by not increasing the hardened layer depth E of the inner-side induction-hardened part 9a on the inner-side of the outer ring 2 where improvement in indentation resistance is not necessary. In addition, since the inner-side induction-hardened part 9a and the outer-side induction-hardened part 9b are separated from each other, reduction in bearing life due to deterioration in crystal grain size in a portion between the inner-side induction-hardened part 9a and the outer-side induction-hardened part 9b can be suppressed. That is, the indentation resistance at the outer-side of the outer ring 2 can be improved while minimizing a quenching crack and deterioration in crystal grain size.

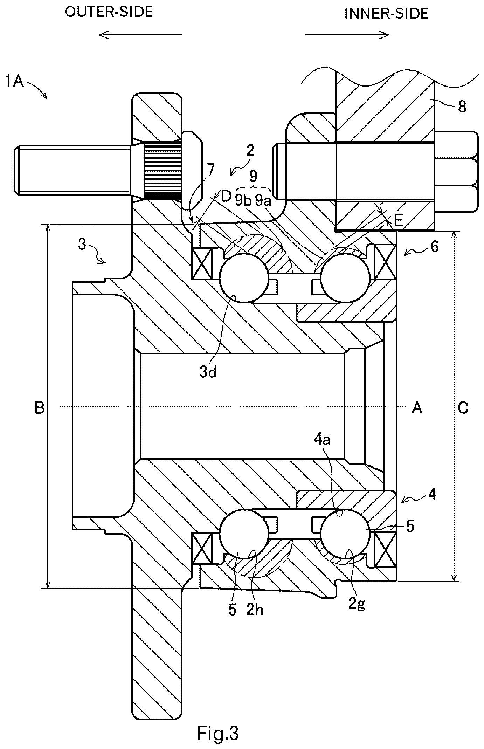

Next, features and effects of a bearing device for a vehicle wheel 1A according to a second embodiment will be described with reference to FIG. 3. Here, only portions different from those of the bearing device for a vehicle wheel 1 according to the first embodiment will be described.

The inner-side of the outer ring 2 has a low degree of freedom in changing an outside diameter C, since fitting with a peripheral component (knuckle 8) needs to be considered. Meanwhile, the outer-side of the outer ring 2 has a high degree of freedom in changing an outside diameter B, since fitting with the knuckle 8 needs not be considered. Thus, the outer-side outside diameter B can be set larger than the inner-side outside diameter C, and the outer ring 2 is formed to have the outer-side outside diameter B larger than the inner-side outside diameter C.

According to the bearing device for a vehicle wheel 1A configured as described above, increasing the thickness in the outer-side of the outer ring 2 can avoid a quenching crack due to insufficient thickness resulting from increasing the hardened layer depth D of the outer-side induction-hardened part 9b. In addition, since increasing the outer-side thickness of the outer ring 2 enhances the rigidity of the outer-side of the outer ring 2, deterioration in roundness of the outer raceway surface 2h due to loading is reduced. This increases the steel ball load factor of the outer-side of the outer ring 2 and improves indentation resistance.

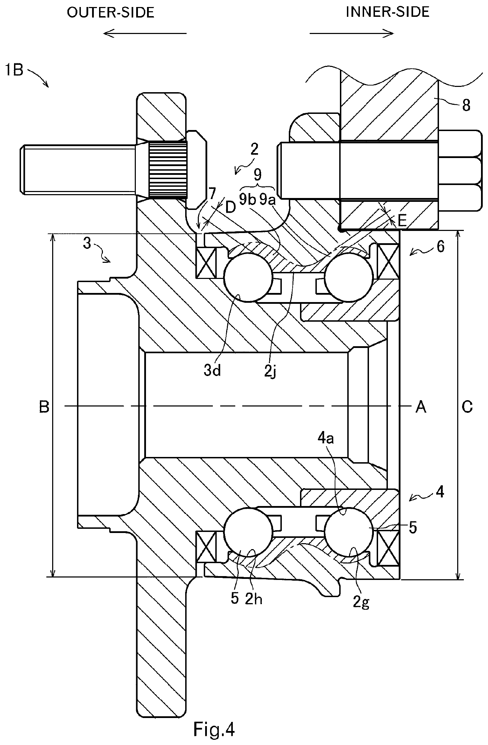

Next, features and effects of a bearing device for a vehicle wheel 1B according to a third embodiment will be described with reference to FIG. 4. Here, only portions different from those of the bearing device for a vehicle wheel 1 according to the first embodiment will be described.

The inner-side induction-hardened part 9a and the outer-side induction-hardened part 9b join at the radially inner side to be integrated. In the outer ring 2, the induction-hardened part 9 is formed entirely on the inner circumferential surface 2j between the outer raceway surface 2g on the inner-side and the outer raceway surface 2h on the outer-side.

According to the bearing device for a vehicle wheel 1B configured as described above, a portion of the induction-hardened part 9 between the outer-side outer raceway surface 2h and the inner-side outer raceway surface 2g is formed in a wider area. Thus, the indentation resistance of an axially inner side (inner-side) portion of the outer-side outer raceway surface 2h can be improved.

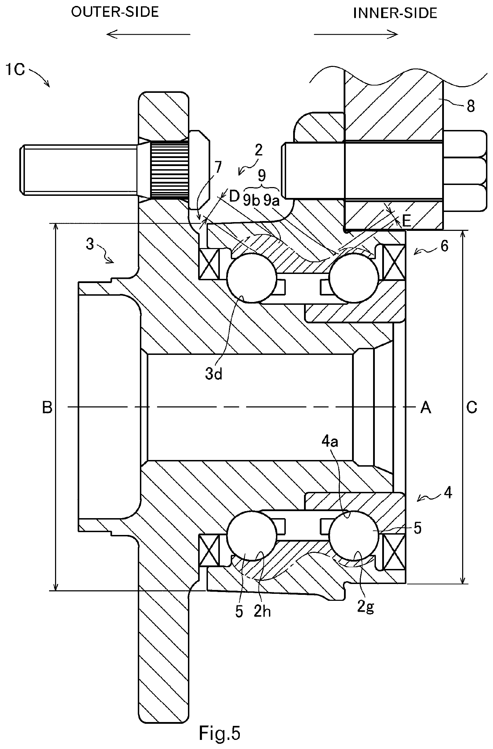

Next, features and effects of a bearing device for a vehicle wheel 1C according to a fourth embodiment will be described with reference to FIG. 5. Here, only portions different from those of the bearing device for a vehicle wheel 1 according to the third embodiment will be described.

The inner-side of the outer ring 2 has a low degree of freedom in changing an outside diameter C, since fitting with a peripheral component (knuckle 8) needs to be considered. Meanwhile, the outer-side of the outer ring 2 has a high degree of freedom in changing an outside diameter B, since fitting with the knuckle 8 needs not be considered. Thus, the outer-side outside diameter B can be set larger than the inner-side outside diameter C, and the outer ring 2 is formed to have the outer-side outside diameter B larger than the inner-side outside diameter C.

According to the bearing device for a vehicle wheel 1C configured as described above, increasing the thickness of the outer-side of the outer ring 2 can avoid a quenching crack due to insufficient thickness resulting from increasing the hardened layer depth D of the outer-side induction-hardened part 9b. In addition, since increasing the outer-side thickness of the outer ring 2 enhances the rigidity of the outer-side of the outer ring 2, deterioration in roundness of the outer raceway surface 2h due to loading is reduced. This increases the steel ball load factor of the outer-side of the outer ring 2 and improves indentation resistance.

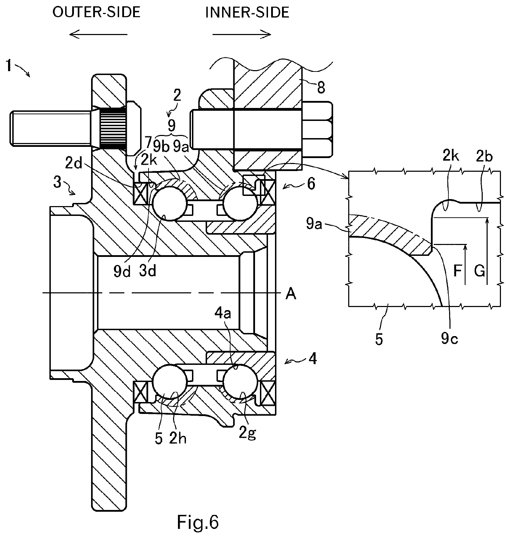

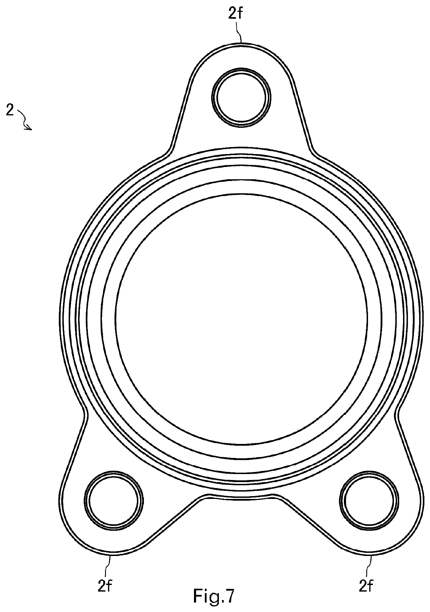

Next, other features and effects of the bearing devices for a vehicle wheel 1, 1A, 1B, and 1C according to the embodiments will be described with reference to FIGS. 6 and 7.

As illustrated in FIG. 6, the outer ring 2 has a pocket 2k on each of the outer-side (axially inner side) of the seal fitting portion 2b and the inner-side (axially inner side) of the seal fitting portion 2d. The pocket 2k is formed in a concave curved surface (rounded shape) in a cross-sectional view. In the outer ring 2, an inner-side end 9c of the inner-side induction-hardened part 9a is on the radially inner side of the inner-side pocket 2k, and an outer-side end 9d of the outer-side induction-hardened part 9b is on the radially inner side of the outer-side pocket 2k. For example, the inner-side pocket 2k has an inside diameter G at its radially inner end. The inner-side induction-hardened part 9a has an outside diameter F at the inner-side end 9c thereof. The outside diameter F of the inner-side induction-hardened part 9a is smaller than the inside diameter G of the pocket 2k.

According to the bearing devices for a vehicle wheel 1, 1A, 1B, and 1C configured as described above, the induction-hardened part 9 is not formed in the pocket 2k. When the boundary between the induction-hardened part 9 and the portion where no induction-hardened part 9 is formed is formed in the pocket 2k, tensile stress concentration may occur at the boundary. Forming the pocket 2k as described above prevents stress concentration at the boundary. Thus, degrading of the durability of the pocket 2k can be prevented.

Since the surface hardness of the rolling elements 5 is higher than the surface hardness of the outer raceway surfaces 2g and 2h, excessive radial loading on the bearing device for a vehicle wheel 1, 1A, 1B, or 1C may create an indentation on the outer raceway surfaces 2g and 2h. However, according to the bearing devices for a vehicle wheel 1, 1A, 1B, and 1C of the embodiments, the indentation resistance at the outer-side of the outer ring 2 can be improved as described above. That is, the indentation resistance of the outer raceway surface 2h can be improved.

As illustrated in FIG. 7, for example, the outer ring 2 has a vehicle body mounting flange 2f at the upper end on the side opposite the road. When an excessive radial load is applied to the bearing device for a vehicle wheel 1, 1A, 1B, or 1C having such a vehicle body mounting flange 2f, the moment from the vehicle wheel mounting flange 3b is readily transmitted to the upper portion of the outer-side outer raceway surface 2h, which may readily create an indentation on the outer raceway surface 2h. However, according to the bearing devices for a vehicle wheel 1, 1A, 1B, and 1C of the embodiments, the indentation resistance at the outer-side of the outer ring 2 can be improved as described above. That is, the indentation resistance of the outer raceway surface 2h can be improved.

The bearing devices for a vehicle wheel 1, 1A, 1B, and 1C according to the embodiments have each been described as a bearing device for a vehicle wheel having a third generation structure of rotating inner ring in which the inner raceway surface 3d for the rolling elements 5 is directly formed on the outer circumference of the hub ring 3. However, the embodiment is not limited to this configuration, and may have, for example, a second generation structure of rotating inner ring in which a pair of inner rings 4 is press-fitted and fixed to the hub ring 3. Furthermore, the bearing device for a vehicle wheel may be a third generation structure or a second generation structure of rotating outer ring. In addition, the above embodiments each merely illustrate a representative mode of the present invention, and various modifications can be made. The present invention is defined by the appended claims.

### INDUSTRIAL APPLICABILITY

The present invention is applicable to a bearing device for a vehicle wheel.

### REFERENCE SIGNS LIST

- 1: bearing device for a vehicle wheel
- 1A: bearing device for a vehicle wheel
- 1B: bearing device for a vehicle wheel
- 1C: bearing device for a vehicle wheel
- 2: outer ring (outer member)
- 2b: seal fitting portion
- 2d: seal fitting portion
- 2g: outer raceway surface
- 2h: outer raceway surface
- 2k: pocket
- 3: hub ring (inner member)
- 3d: inner raceway surface
- 4: inner ring (inner member)
- 4a: inner raceway surface
- 5: rolling element
- 6: inner-side seal member
- 7: outer-side seal member
- 9: induction-hardened part
- 9a: inner-side induction-hardened part
- 9b: outer-side induction-hardened part
- 9c: inner-side end of inner-side induction-hardened part
- 9d: outer-side end of outer-side induction-hardened part
- B: outer-side outside diameter of outer member
- C: inner-side outside diameter of outer member
- D: outer-side hardened layer depth
- E: inner-side hardened layer depth
- θ: angle

## Claims

1. A bearing device (1) for a vehicle wheel, the bearing device (1) comprising:
an outer member (2) having a double-row of outer raceway surfaces (2g, 2h) on an inner circumference;
an inner member (3, 4) having a double-row of inner raceway surfaces (3d, 4a) facing the double-row of outer raceway surfaces (2g, 2h);
a double-row of rolling elements (5) rollably held between the outer raceway surfaces (2g, 2h) of the outer member (2) and the inner raceway surfaces (3d, 4a) of the inner member (3, 4); and
a seal member (6, 7) that closes an open end of an annular space formed by the outer member (2) and the inner member (3, 4),
wherein
the outer member (2) has an inner-side induction-hardened part (9a) formed by induction hardening along the outer raceway surface (2g) on an inner-side, and an outer-side induction-hardened part (9b) formed by induction hardening along the outer raceway surface (2h) on an outer-side,
a hardened layer depth (D) of the outer-side induction-hardened part (9b) is deeper than a hardened layer depth (E) of the inner-side induction-hardened part (9a),
the inner-side induction-hardened part (9a) and the outer-side induction-hardened part (9b) are separated from each other,
the outer member (2) includes a seal fitting portion (2b, 2d) to which the seal member (6, 7) is fitted,
**characterized in that**
a pocket (2k) is provided on an axially inner side of the seal fitting portion (2b, 2d),
an inner-side end (9c) of the inner-side induction-hardened part (9a) is located on a radially inner side of the pocket (2k) on the inner-side, and an outer-side end (9d) of the outer-side induction-hardened part (9b) is located on a radially inner side of the pocket (2k) on the outer-side, and
an outside diameter (F) of the inner-side induction-hardened part (9a) is smaller than an inside diameter (G) of the pocket (2k).

2. The bearing device (1) for a vehicle wheel according to claim 1, wherein an outer-side outside diameter (B) of the outer member (2) is larger than an inner-side outside diameter (C) of the outer member (2).

3. A bearing device (1) for a vehicle wheel, the bearing device (1) comprising:
an outer member (2) having a double-row of outer raceway surfaces (2g, 2h) on an inner circumference;
an inner member (3, 4) having a double-row of inner raceway surfaces (3d, 4a) facing the double-row of outer raceway surfaces (2g, 2h);
a double-row of rolling elements (5) rollably held between the outer raceway surfaces (2g, 2h) of the outer member (2) and the inner raceway surfaces (3d, 4a) of the inner member (3, 4); and
a seal member (6, 7) that closes an open end of an annular space formed by the outer member (2) and the inner member (3, 4),
wherein
the outer member (2) has an inner-side induction-hardened part (9a) formed by induction hardening along the outer raceway surface (2g) on an inner-side, and an outer-side induction-hardened part (9b) formed by induction hardening along the outer raceway surface (2h) on an outer-side,
a hardened layer depth (D) of the outer-side induction-hardened part (9b) is deeper than a hardened layer depth (E) of the inner-side induction-hardened part (9a),
the inner-side induction-hardened part (9a) and the outer-side induction-hardened part (9b) are joined,
the outer member (2) includes a seal fitting portion (2b, 2d) to which the seal member (6, 7) is fitted,
**characterized in that**
a pocket (2k) is provided on an axially inner side of the seal fitting portion (2b, 2d),
an inner-side end (9c) of the inner-side induction-hardened part (9a) is located on a radially inner side of the pocket (2k) on the inner-side, and an outer-side end (9d) of the outer-side induction-hardened part (9b) is located on a radially inner side of the pocket (2k) on the outer-side, and
an outside diameter (F) of the inner-side induction-hardened part (9a) is smaller than an inside diameter (G) of the pocket (2k).

4. The bearing device (1) for a vehicle wheel according to claim 3, wherein an outer-side outside diameter (B) of the outer member (2) is larger than an inner-side outside diameter (C) of the outer member (2).

5. The bearing device (1) for a vehicle wheel according to any one of claims 1 to 4, wherein in a region within a range where an angle with respect to a rotation axis of the bearing device (1) for a vehicle wheel is from 30 to 45 degrees, the hardened layer depth (D) of the outer-side induction-hardened part (9b) is deeper than the hardened layer depth (E) of the inner-side induction-hardened part (9a).

6. The bearing device (1) for a vehicle wheel according to any one of claims 1 to 5, wherein surface hardness of the rolling elements (5) is higher than surface hardness of the double-row of outer raceway surfaces (2g, 2h).

## Patentansprüche

1. Lagervorrichtung (1) für ein Fahrzeugrad, wobei die Lagervorrichtung (1) umfasst:
ein Außenelement (2) mit einer doppelten Reihe von Außenlaufflächen (2g, 2h) an einem Innenumfang;
ein Innenelement (3, 4) mit einer doppelten Reihe von Innenlaufflächen (3d, 4a), die der doppelten Reihe von Außenlaufflächen (2g, 2h) gegenüberliegen;
eine doppelte Reihe von Wälzkörpern (5), die rollbar zwischen den Außenlaufflächen (2g, 2h) des Außenelements (2) und den Innenlaufflächen (3d, 4a) des Innenelements (3, 4) gehalten sind; und
ein Dichtungselement (6, 7), das ein offenes Ende eines durch das Außenelement (2) und das Innenelement (3, 4) gebildeten ringförmigen Raums verschließt,
wobei
das Außenelement (2) einen innerseitigen induktionsgehärteten Abschnitt (9a), der durch Induktionshärten entlang der Außenlauffläche (2g) auf der Innenseite gebildet ist, und einen außenseitigen induktionsgehärteten Abschnitt (9b) aufweist, der durch Induktionshärten entlang der Außenlauffläche (2h) auf einer Außenseite gebildet ist,
die Härteschichttiefe (D) des außenseitigen induktionsgehärteten Abschnitts (9b) größer ist als die Härteschichttiefe (E) des innenseitigen induktionsgehärteten Abschnitts (9a),
der innenseitige induktionsgehärtete Abschnitt (9a) und der außenseitige induktionsgehärtete Abschnitt (9b) voneinander getrennt sind,
das Außenelement (2) einen Dichtungspassabschnitt (2b, 2d) aufweist, an dem das Dichtungselement (6, 7) angebracht ist,
**dadurch gekennzeichnet, dass**
an einer axial inneren Seite des Dichtungspassabschnitts (2b, 2d) eine Aussparung (2k) vorgesehen ist,
ein inneres Ende (9c) des innenseitigen induktionsgehärteten Abschnitts (9a) sich auf der radial inneren Seite der Aussparung (2k) auf der Innenseite befindet, und ein außenseitiges Ende (9d) des außenseitigen induktionsgehärteten Abschnitts (9b) sich auf der radial inneren Seite der Aussparung (2k) auf der Außenseite befindet, und
der Außendurchmesser (F) des innenseitigen induktionsgehärteten Abschnitts (9a) kleiner ist als der Innendurchmesser (G) der Aussparung (2k).

2. Die Lagervorrichtung (1) für ein Fahrzeugrad nach Anspruch 1, wobei ein außenseitiger Außendurchmesser (B) des Außenelements (2) größer ist als ein innenseitiger Außendurchmesser (C) des Außenelements (2).

3. Lagervorrichtung (1) für ein Fahrzeugrad, wobei die Lagervorrichtung (1) umfasst:
ein Außenelement (2) mit einer doppelten Reihe von Außenlaufflächen (2g, 2h) an einem Innenumfang;
ein Innenelement (3, 4) mit einer doppelten Reihe von Innenlaufflächen (3d, 4a), die der doppelten Reihe von Außenlaufflächen (2g, 2h) gegenüberliegen;
eine doppelte Reihe von Wälzkörpern (5), die rollbar zwischen den Außenlaufflächen (2g, 2h) des Außenelements (2) und den Innenlaufflächen (3d, 4a) des Innenelements (3, 4) gehalten sind; und
ein Dichtungselement (6, 7), das ein offenes Ende eines durch das Außenelement (2) und das Innenelement (3, 4) gebildeten ringförmigen Raums verschließt,
wobei
das Außenelement (2) einen innenseitigen induktionsgehärteten Abschnitt (9a), der durch Induktionshärten entlang der Außenlauffläche (2g) auf der Innenseite gebildet ist, und einen außenseitigen induktionsgehärteten Abschnitt (9b) aufweist, der durch Induktionshärten entlang der Außenlauffläche (2h) auf der Außenseite gebildet ist,
die Härteschichttiefe (D) des außenseitigen induktionsgehärteten Abschnitts (9b) größer ist als die Härteschichttiefe (E) des innenseitigen induktionsgehärteten Abschnitts (9a),
der innenseitige induktionsgehärtete Abschnitt (9a) und der außenseitige induktionsgehärtete Abschnitt (9b) miteinander verbunden sind,
das Außenelement (2) einen Dichtungspassabschnitt (2b, 2d) aufweist, an dem das Dichtungselement (6, 7) angebracht ist,
**dadurch gekennzeichnet, dass**
an einer axial inneren Seite des Dichtungspassabschnitts (2b, 2d) eine Aussparung (2k) vorgesehen ist,
ein innenseitiges Ende (9c) des innenseitigigen induktionsgehärteten Abschnitts (9a) sich auf der radial inneren Seite der Aussparung (2k) auf der Innenseite befindet und ein außenseitiges Ende (9d) des außenseitigen induktionsgehärteten Abschnitts (9b) sich auf der radial inneren Seite der Aussparung (2k) auf der Außenseite befindet, und
der Außendurchmesser (F) des innenseitigen induktionsgehärteten Abschnitts (9a) kleiner ist als der Innendurchmesser (G) der Aussparung (2k).

4. Die Lagervorrichtung (1) für ein Fahrzeugrad nach Anspruch 1, wobei ein außenseitiger Außendurchmesser (B) des Außenelements (2) größer ist als ein innenseitiger Außendurchmesser (C) des Außenelements (2).

5. Die Lagervorrichtung (1) für ein Fahrzeugrad nach einem der Ansprüche 1 bis 4, wobei in einem Bereich innerhalb eines Bereichs, in dem ein Winkel bezüglich einer Drehachse der Lagervorrichtung (1) für ein Fahrzeugrad zwischen 30 und 45 Grad beträgt, die Härteschichttiefe (D) des außenseitigen induktionsgehärteten Abschnitts (9b) tiefer ist als die Härteschichttiefe (E) des innenseitigen induktionsgehärteten Abschnitts (9a).

6. Die Lagervorrichtung (1) für ein Fahrzeugrad nach einem der Ansprüche 1 bis 5, wobei die Oberflächenhärte der Wälzkörper (5) höher ist als die Oberflächenhärte der doppelreihigen Außenlaufflächen (2g, 2h).

## Revendications

1. Dispositif de palier (1) pour une roue de véhicule, le dispositif de palier (1) comprenant :
un organe externe (2) présentant une double rangée de surfaces de chemin de roulement externes (2g, 2h) sur une circonférence interne ;
un organe interne (3, 4) présentant une double rangée de surfaces de chemin de roulement internes (3d, 4a) faisant face à la double rangée de surfaces de chemin de roulement externes (2g, 2h) ;
une double rangée d'éléments roulants (5) maintenus de manière à pouvoir rouler entre les surfaces de chemin de roulement externes (2g, 2h) de l'organe externe (2) et les surfaces de chemin de roulement internes (3d, 4a) de l'organe interne (3, 4) ; et
un organe d'étanchéité (6, 7) qui ferme une extrémité ouverte d'un espace annulaire formé par l'organe externe (2) et l'organe interne (3, 4),
l'organe externe (2) présentant une partie durcie par induction côté interne (9a) formée par durcissement par induction le long de la surface de chemin de roulement externe (2g) sur un côté interne, et une partie durcie par induction côté externe (9b) formée par durcissement par induction le long de la surface de chemin de roulement externe (2h) sur un côté externe,
une profondeur de couche durcie (D) de la partie durcie par induction côté externe (9b) étant plus profonde qu'une profondeur de couche durcie (E) de la partie durcie par induction côté interne (9a),
la partie durcie par induction côté interne (9a) et la partie durcie par induction côté externe (9b) étant séparées l'une de l'autre,
l'organe externe (2) comprenant une partie d'ajustement de joint d'étanchéité (2b, 2d) sur laquelle l'organe d'étanchéité (6, 7) est ajusté,
**caractérisé en ce que**
une poche (2k) est disposée sur un côté axialement interne de la partie d'ajustement de joint d'étanchéité (2b, 2d),
une extrémité côté interne (9c) de la partie durcie par induction côté interne (9a) est située sur un côté radialement interne de la poche (2k) sur le côté interne, et une extrémité côté externe (9d) de la partie durcie par induction côté externe (9b) est située sur un côté radialement interne de la poche (2k) sur le côté externe, et
un diamètre extérieur (F) de la partie durcie par induction côté interne (9a) est inférieur à un diamètre intérieur (G) de la poche (2k).

2. Dispositif de palier (1) pour une roue de véhicule selon la revendication 1, dans lequel un diamètre extérieur côté externe (B) de l'organe externe (2) est supérieur à un diamètre extérieur côté interne (C) de l'organe externe (2).

3. Dispositif de palier (1) pour une roue de véhicule, le dispositif de palier (1) comprenant :
un organe externe (2) présentant une double rangée de surfaces de chemin de roulement externes (2g, 2h) sur une circonférence interne ;
un organe interne (3, 4) présentant une double rangée de surfaces de chemin de roulement internes (3d, 4a) faisant face à la double rangée de surfaces de chemin de roulement externes (2g, 2h) ;
une double rangée d'éléments roulants (5) maintenus de manière à pouvoir rouler entre les surfaces de chemin de roulement externes (2g, 2h) de l'organe externe (2) et les surfaces de chemin de roulement internes (3d, 4a) de l'organe interne (3, 4) ; et
un organe d'étanchéité (6, 7) qui ferme une extrémité ouverte d'un espace annulaire formé par l'organe externe (2) et l'organe interne (3, 4),
dans lequel l'organe externe (2) présente une partie durcie par induction côté interne (9a) formée par durcissement par induction le long de la surface de chemin de roulement externe (2g) sur un côté interne, et une partie durcie par induction côté externe (9b) formée par durcissement par induction le long de la surface de chemin de roulement externe (2h) sur un côté externe,
une profondeur de couche durcie (D) de la partie durcie par induction côté externe (9b) est plus profonde qu'une profondeur de couche durcie (E) de la partie durcie par induction côté interne (9a),
la partie durcie par induction côté interne (9a) et la partie durcie par induction côté externe (9b) sont jointes,
l'organe externe (2) comprend une partie d'ajustement de joint d'étanchéité (2b, 2d) sur laquelle l'organe d'étanchéité (6, 7) est ajusté,
**caractérisé en ce que**
une poche (2k) est disposée sur un côté axialement interne de la partie d'ajustement de joint d'étanchéité (2b, 2d), une extrémité côté interne (9c) de la partie durcie par induction côté interne (9a) est située sur un côté radialement interne de la poche (2k) sur le côté interne, et une extrémité côté externe (9d) de la partie durcie par induction côté externe (9b) est située sur un côté radialement interne de la poche (2k) sur le côté externe, et
un diamètre extérieur (F) de la partie durcie par induction côté interne (9a) est inférieur à un diamètre intérieur (G) de la poche (2k).

4. Dispositif de palier (1) pour une roue de véhicule selon la revendication 3, dans lequel un diamètre extérieur côté externe (B) de l'organe externe (2) est supérieur à un diamètre extérieur côté interne (C) de l'organe externe (2).

5. Dispositif de palier (1) pour une roue de véhicule selon l'une quelconque des revendications 1 à 4, dans une région dans une plage dans laquelle un angle par rapport à un axe de rotation du dispositif de palier (1) pour une roue de véhicule est de 30 à 45 degrés, la profondeur de couche durcie (D) de la partie durcie par induction côté externe (9b) étant plus profonde que la profondeur de couche durcie (E) de la partie durcie par induction côté interne (9a).

6. Dispositif de palier (1) pour une roue de véhicule selon l'une quelconque des revendications 1 à 5, la dureté de surface des éléments roulants (5) étant supérieure à la dureté de surface de la double rangée de surfaces de chemin de roulement externes (2g, 2h).
